# FASCICULE DE BREVET EUROPEEN

(11) **EP 0 629 345 B1**
(45) Date de publication et mention de la délivrance du brevet: **23.12.1998**
(21) Numéro de dépôt: 94401339.0
(22) Date de dépôt: 15.06.1994
(51) Int. Cl.: A01N 41/02, A01N 41/04, A01N 49/00, A01N 35/04, A01N 61/00

(54) **Composition insecticide/acaricide à base d'agent(s) tensio-actif(s) anionique(s) et de substance(s) semiochimique(s), et procédé de lutte contre les arthropodes utilisant cette composition**
Insektizide/Akarizide Zusammensetzungen auf der Basis von anionischen Tensiden und Semiochemikalien, und Verfahren zur Bekämpfung von Arthropoden
Insecticidal/acaricidal composition based on anionic surfactant(s), and semiochemical(s), and method for combatting arthropods using this composition

(30) Priorité: 16.06.1993 FR 9307237
(43) Date de publication de la demande: 21.12.1994
(73) Titulaire: NATURAL PLANT PROTECTION - N.P.P., F-64150 Nogueres (FR)
(72) Inventeur: Guillon, Michel, F-64000 Pau (FR)
(74) Mandataire: Kédinger, Jean-Paul

(56) Documents cités:
- EP-A- 0 188 845
- EP-A- 0 322 583
- EP-A- 0 525 893
- WO-A-87/04591
- FR-A- 2 501 007
- US-A- 4 502 926
- US-A- 4 731 379
- US-A- 5 017 615

## Description

La présente invention a pour objet une composition et un procédé pour la lutte contre les insectes et les acariens.

La lutte contre les insectes prédateurs des cultures repose actuellement essentiellement sur l'utilisation de produits chimiques neurotoxiques non spécifiques, avec des risques maintenant bien connus pour les utilisateurs et l'environnement.

De nombreux insecticides plus spécifiques sont apparus sur le marché qui agissent au niveau de la formation de la cuticule, ou du développement de l'insecte : ce sont les régulateurs chimiques de croissance qui miment ou inhibent le contrôle endocrine exercé par l'hormone juvénile. Toutefois, ces molécules chimiques peuvent être rapidement reconnues et détoxifiées par l'insecte cible, avec apparition de résistances.

On peut encore contrôler les insectes grâce aux médiateurs chimiques qui régulent les relations d'insecte à insecte ou les relations plante - insecte. Il s'agit des phéromones, des kairomones et des allomones (voir EP-A-188845 et WO-A-8704591 qui décrirent des compositions insecticides contenant ce type de produits).

Ces médiateurs chimiques (encore appelés substances sémiochimiques) n'ont aucune activité insecticide *per se*.

De nouvelles exigences en matière de toxicologie et d'impact sur l'environnement (écotoxicité) conduisent à adopter une approche biorationnelle pour la conception de nouvelles méthodes de lutte contre les insectes ravageurs des cultures. C'est dans cet esprit que les présents inventeurs ont mis au point une nouvelle composition pour la lutte contre les insectes et les acariens qui se caractérise en ce qu'elle contient dans un véhicule approprié, en tant que principe actif, un mélange comprenant :
- au moins un agent tensio-actif anionique, et
- au moins un médiateur chimique agissant sur le comportement des insectes et acariens visés et choisi parmi les substances phéromonales et les substances allélochimiques.

En raison de la non toxicité et du caractère biodégradable du ou des agents tensio-actifs anioniques, ainsi que du caractère naturel du ou des médiateurs chimiques, cette composition présente toutes les garanties de respect de l'environnement et d'innocuité pour les utilisateurs.

En outre, cette composition qui n'est constituée que de composants ne possédant en eux-mêmes qu'une très faible action insecticide/acaricide voire une action nulle, présente de manière tout à fait inattendue une activité insecticide/acaricide très puissante comparable à celle des molécules chimiques utilisées dans l'agriculture moderne ; cette activité insecticide/acaricide résulte apparemment d'un effet de synergie entre les composants mis en oeuvre dans cette composition.

A titre d'agent tensio-actif anionique, utilisation peut être faite de tout agent tensio-actif anionique ayant une action inhibitrice sur la formation de la cuticule des insectes et acariens visés. Il s'agit notamment des agents tensio-actifs anioniques ayant une valeur HLB (balance entre le caractère lipophile et le caractère hydrophile) d'au moins 10, ce qui indique un pouvoir lipophile élevé qui permet de dissoudre les lipides cuticulaires et les enzymes de type phénoloxydase, telle la laccase, d'après un procédé complexe décrit par K. J. KRAMER et Coll. dans Journal of American Chemical Society, pages 87-105, 1991. Ces enzymes sont indispensables pour la formation des liaisons chimiques entre les macromolécules (chitine) qui constituent la matière de la cuticule, assurant la mélanisation cuticulaire et donc la protection de l'insecte ou l'acarien contre les rayonnements U.V.

Ainsi, les agents tensio-actifs anioniques à mettre en oeuvre selon la présente invention pourront par exemple être choisis :
- dans le groupe (A) constitué par (i) les sels de métal alcalin, de métal alcalino-terreux, d'ammonium ou de triéthanolamine des acides alkyl sulfoniques, aryl sulfoniques, alkyl aryl sulfoniques et alkyl aryl polyéther sulfoniques et (ii) les mélanges de ces sels,
- dans le groupe (B) constitué par (i) les sels de métal alcalin, de métal alcalino-terreux, d'ammonium ou triéthanolamine de l'acide sulfosuccinique, des esters d'alkyle de l'acide sulfosuccinique, des esters dialkyliques de l'acide sulfosuccinique, des esters d'alkyl aryle de l'acide sulfosuccinique et des esters de polyoxyéthylène alkyl aryle de l'acide sulfosuccinique et (ii) les mélanges de ces sels, et
- dans le groupe (C) constitué par (i) les sels de métal alcalin ou alcalino-terreux, des esters d'acide sulfurique, d'acide phosphorique ou d'acide sulfoacétique et d'alcools gras saturés ou insaturés, (ii) les alkyl aryl sulfates, alkyl aryl phosphates et alkyl aryl sulfoacétates de métal alcalin ou alcalino-terreux, (iii) les dérivés mono ou polyoxyéthylénés des composés (i) et (ii), et (iv) les mélanges d'au moins deux composés choisis parmi les composés (i), (ii) et (iii).

Il est à noter que dans les groupes (A) et (B), le métal alcalin est de préférence le sodium, le métal alcalino-terreux est de préférence le calcium, le groupe alkyle est de préférence un groupe alkyle en C₈ - C₁₃ (par exemple iso-octyle, dodécyle ou tridécyle), le groupe aryle est de préférence le groupe phényle, le groupe polyéther est de préférence un groupe polyoxyéthylène et le groupe polyoxyéthylène est de préférence un groupe dioxyéthylène ou trioxyéthylène.

Dans le groupe (C), le métal alcalin est de préférence le sodium, le métal alcalino-terreux est de préférence le magnésium, les alcools gras saturés ou insaturés sont de préférence en C₈ à C₁₈ (par exemple alcools iso-octyliqe, dodécylique, laurique, myristique, tétradécylique et stéarylique), le groupe alkyle est de préférence un groupe alkyle en C₈ à C₁₈ (par exemple octyle, dodécycle, lauryle, myristyle, tétradécyle, stéaryle), le groupe aryle est de préférence le groupe phényle et les dérivés polyoxyéthylénés sont de préférence des dérivés di-ou trioxyéthylénés.

Parmi les agents tensio-actifs anioniques ci-dessus, une préférence toute particulière est donnée au dodécyl sulfate de sodium et au dioctyl sulfosuccinate de sodium.

Le ou les médiateurs chimiques à mettre en oeuvre dans la composition selon l'invention sont choisis parmi les substances phéromonales (ou phéromones) et les substances allélochimiques.

Les phéromones sont des substances chimiques volatiles émises par les insectes et les acariens. Elles permettent une communication intraspécifique en modifiant immédiatement le comportement de l'insecte ou de l'acarien récepteur : ce sont alors des phéromones d'alarme, de trace, d'agrégation, sexuelles. Elles peuvent aussi agir à plus long terme : c'est le cas des phéromones émises par les insectes et acariens sociaux.

Les substances allélochimiques qui regroupent les allomones et les kairomones, permettent une communication interspécifique et sont émises par les insectes et acariens et les plantes.

Les médiateurs chimiques sont largement décrits dans la littérature et on pourra se reporter notamment aux articles de M. N. INSCOE et Morton BEROZA : "Analysis of Pheromones and other Compounds Controlling Insect Behavior" dans "Analytical Methods for Pesticides and Plant Growth Regulators" édité par Gunter Zweig Vol. III, p. 33-114, Academic Press 1976 ; de Robert L. METCALF et Esther R. METCALF "Plant Kairomones in Insect Ecology and Control", Edit. Chapman and Hall ; et de Daniel E. SONENSHINE "Pheromones and other semiochemicals of the Acari" dans Ann. Rev. Entomol., 1985,30:1-28. A titre d'exemple, on citera le nérolidol, le cinéole, l'alpha-pinène, le farnésol, le géraniol, l'anisaldéhyde, le trans-béta-farnésène, le citral, la coumarine et leurs mélanges compatibles.

Pour chaque famille ou genre d'insectes et d'acariens visés, il existe un ou plusieurs médiateurs ou une ou plusieurs compositions de médiateurs susceptibles d'être efficaces et l'homme de métier sait parfaitement utiliser ces médiateurs et compositions de médiateurs selon l'insecte ou l'acarien visé.

Ainsi, à titre d'exemple, on utilisera notamment :
- pour les acariens : le nérolidol, le farnésol, le géraniol ou leurs mélanges ;
- pour les thysanoptères : un composé de type aldéhyde et de préférence l'anisaldéhyde ;
- pour les pucerons : le trans-béta-farnésène (phéromone d'alarme), le géraniol (anti-appétant) ou leurs mélanges ;
- pour les cochenilles : un ou plusieurs terpènes, le citral ou leurs mélanges ;
- pour les coléoptères : le géraniol, la coumarine ou leurs mélanges.

On ajoutera que, selon l'invention, les médiateurs chimiques, généralement constitués de molécules volatiles, sont tous miscibles dans des proportions variables avec les agents tensio-actifs anioniques susmentionnés.

La composition selon l'invention peut en outre contenir un ou plusieurs rétenteurs de produit volatil. Il s'agit de composés chimiques à longue chaîne qui permettent un relargage lent des produits volatils (médiateurs chimiques) et, partant, de prolonger leur durée d'action. Conviennent notamment les rétenteurs du type acides gras saturés ou insaturés et dérivés (esters par exemple) de ces acides et notamment les acides et dérivés de la série en C₁₁. A titre d'exemples, on citera l'acide undécylénique, les esters d'alkyle inférieur (en C₁-C₄) de cet acide tels que l'undécylénate de méthyle, l'acide bromoundécanoïque ou encore l'huile de ricin.

Le véhicule mis en oeuvre dans la composition selon l'invention sera choisi en fonction du mode d'application souhaité de la composition. Le mode d'application sera très généralement la pulvérisation, auquel cas le véhicule sera liquide et pourra être choisi parmi l'eau, un monoalcool ou polyalcool, miscible à l'eau, tel que l'isopropanol ou un glycol notamment le monopropylène glycol, les mélanges d'eau et au moins un desdits monoalcool et polyalcool, les huiles minérales et les huiles végétales. On ajoutera que lorsque l'agent tensio-actif est le dioctyl sulfosuccinate de sodium, le véhicule sera de préférence un glycol tel que le monoprolylène glycol.

La composition selon l'invention est habituellement préparée par simple mélange des constituants.

On précisera que la composition insecticide/acaricide selon l'invention pourra être appliquée, notamment par pulvérisation, sur les cultures à protéger, sur le sol ou dans le sol.

La concentration en principe actif de cette composition peut varier dans de larges limites. Ainsi, par exemple, si la composition se présente sous la forme d'un concentré à diluer avec de l'eau avant utilisation, la concentration du ou des agents tensio-actifs peut être de 50 à 80 %, de préférence de 60 à 75 % ; la concentration du ou des médiateurs chimiques peut être de 0,01 % à 10 %, de préférence de 0,5 à 7 % ; et la concentration du ou des rétenteurs peut être de 10 à 18 %, ces concentrations étant exprimées en pourcentage (p/v) de la composition. Ce concentré sera dilué à l'eau (dilution de 2 % à 2 ‰) avant utilisation, puis pulvérisé (sous sa forme diluée) sur le site à protéger. Dans le cas où le concentré est appliqué sur les plantes à protéger, il sera par exemple pulvérisé à raison de 2 litres dans 100 à 1000 litres d'eau/ha.

La composition selon l'invention est active en particulier sur les arthropodes pour lesquels on a mis en évidence l'existence d'une communication par médiateurs chimiques pour les larves ou les adultes [homoptères (notamment pucerons et cochenilles), coléoptères, thysanoptères et acariens] ainsi que sur ceux dont la formation cuticulaire implique la mise en jeu d'enzymes phénol-oxydases du type laccase.

A titre d'exemples de la composition selon l'invention, on donnera les compositions suivantes :

| - Compositions actives notamment sur les acariens | |
|---|---|
| composition 1 : | |
| . nérolidol et/ou farnésol et/ou géraniol | |
| . dioctyl sulfosuccinate de sodium et/ou dodécyl sulfate de sodium | |
| . undécylénate de méthyle | |
| . eau ou glycol miscible à l'eau | |

| composition 2 : | composition 3 : |
|---|---|
| . nérolidol 2 à 6 g | 4 g |
| . farnésol 1 à 4 g | 1,6 g |
| . géraniol 2 à 6 g | 4 g |
| . dioctyl sulfosuccinate de sodium 600 à 750 g | 630 g |
| . undécylénate de méthyle 100 à 150 g | 130 g |
| . eau ou glycol miscible à l'eau complément à 1000 ml | |

| - Compositions actives sur les pucerons | |
|---|---|
| composition 4 : | |
| . béta-farnésène et/ou géraniol | |
| . dioctyl sulfosuccinate de sodium | |
| . undécylénate de méthyle | |
| . eau ou glycol miscible à l'eau | |

| composition 5 : | composition 6 : |
|---|---|
| . béta-farnésène 0,1 à 0,5 g | 0,1 g |
| . géraniol 5 à 10 g | 5 g |
| . dioctyl sulfosuccinate de sodium 650 à 750 g | 650 g |
| . undécylénate de méthyle 100 à 150 g | 100 g |
| . eau complément à 1000 ml | |

| - Compositions actives sur les thysanoptères | |
|---|---|
| composition 7 : | |
| . anisaldéhyde et/ou géraniol | |
| . dodécyl sulfate de sodium | |
| . undécylénate de méthyle et/ou acide undécylénique | |
| . eau | |

| composition 8 : | composition 9 : |
|---|---|
| . anisaldéhyde 8 à 25 g | 10 g |
| . géraniol 5 à 10 g | 10 g |
| . dodécyl sulfate de sodium 600 à 700 g | 650 g |
| . undécylénate de méthyle 100 à 150 g | 110 g |
| . eau complément à 1000 ml | |

Toutes les compositions exemplifiées ci-dessus se présentent sous la forme de concentrés à diluer avant utilisation (dilution à 2 % - 2 ‰).

La présente invention s'étend par ailleurs à un procédé de protection, à titre préventif ou curatif, d'un site contre les insectes/acariens notamment les insectes/acariens prédateurs des cultures, ce procédé étant caractérisé en ce qu'il comprend l'application sur le site de la composition insecticide/acaricide décrite ci-dessus, cette application étant précédée d'une dilution appropriée par de l'eau si la composition se présente sous la forme d'un concentré. Bien entendu, des résultats similaires seront obtenus si les divers constituants de cette composition sont appliqués séparément sur le site, soit l'un après l'autre, soit simultanément, de manière à former la composition in situ

### Tests d'évaluation d'efficacité biocide :

Les résultats procurés par la présente invention seront illustrés ci-après pour la composition 3 ci-dessus et pour la composition 3a qui ne diffère de la composition 3 que par le remplacement du dioctyl sulfosuccinate de sodium par le dodécyl sulfate de sodium.
I/ Les compositions 3 et 3a comprennent, à titre de médiateurs chimiques, les trois composés terpéniques nérolidol, farnésol et géraniol.
   Le mélange farnésol + nérolidol est déjà connu comme adjuvant des acaricides chimiques (US-A-4 775 534). Ce mélange n'a pas d'action acaricide en soi. Il en est de même du géraniol.
   Par ailleurs, le dioctyl sulfosuccinate de sodium, autre constituant de la composition 3, est dénué d'activité larvicide ou adulticide ; il en est de même du dodécyl sulfate de sodium (autre constituant de la composition 3a).
II/ Ce qui précède montre que les constituants essentiels des compositions 3 et 3a, lorsqu'ils sont considérés isolément, sont dépourvus d'activité acaricide.
   En revanche, l'utilisation conjointe de ces mêmes constituants sous la forme des compositions 3 et 3a, a donné d'excellents résultats acaricides. Ceci a été montré, à titre d'exemple, sur *Tetranychus urticae*, *Eotetranychus carpini* et *Panonychus ulmi*, des acariens parmi les plus dangereux pour les cultures.
III/ Tests en laboratoire
   1. Ces tests sont conduits avec le dispositif de disques de feuille, en survie sur coton humide.
   2. Utilisation a été faite de lots homogènes de *Tetranychus urticae*, soit au stade larvaire (au moins 100 larves ou nymphes/modalité), soit au stade femelles âgées de 48 heures au plus (30 femelles/modalité).
   3. Lors du traitement, les cinq disques d'une modalité sont placés sur un matelas de coton humide ; l'acaricide à tester est pulvérisé sur ces disques (portant les larves, nymphes ou femelles) par un dispositif tour de Potter, sous une pression de 2,5 kg/cm² (2,45.10⁵Pa) et les disques sont ensuite placés dans une chambre climatisée (22° C ; humidité relative : 80 % ; 16 heures de photophase).
      Un disque traité à l'eau distillée est utilisé comme témoin.
      Un suivi journalier permet de noter l'évolution de la mortalité jusqu'à cinq jours après le traitement (J+5) pour les larves traitées et jusqu'à sept jours après le traitement (J+7) pour les adultes traités.
      Après transformation de probit, on établit les droites de régression mortalité corrigée/log de la dose appliquée.
   4. Acaricides testés :
      . PLICTRAN^{R} 600F : il s'agit d'un acaricide chimique à base de Cyhexatin (hydroxyde de tricyclohexyl étain), disponible dans le commerce,
      . composition 3 : désignée ci-après par la référence 91992 et utilisée sous la forme d'une solution dans l'eau, contenant 0,2 ou 0,4 % de 91992 et appliquée à raison de 500 l/ha,
      . composition 3a : désignée ci-après par la référence 91991 et utilisée sous la forme d'une solution dans l'eau, contenant 0,02, 0,04, 0,2 ou 0,4 % de 91991 et appliquée à raison de 500 l/ha,
      . association PLICTRAN^{R} 600F + 91991 : utilisée sous la forme d'une solution dans l'eau, contenant 0,04, 0,2 ou 0,4 % de 91991 et 300, 3000 ou 6000 ppm de Cyhexatin, à raison de 500 l/ha,
      . association PLICTRAN^{R} 600F + 91992 : utilisée sous la forme d'une solution dans l'eau, contenant 0,2 ou 0,4 % de 91992 et 3000 ppm de Cyhexatin, à raison de 500 l/ha.
   5. Résultats :
      Les figures annexées et évoquées ci-après représentent :
      - figure 1, l'évolution du taux de mortalité dans la population de *Tetranychus urticae* (femelles âgées de 24 à 48 heures) en fonction de la dose de Cyhexatin (PLICTRAN^{R} 600F),
      - figure 2, l'évolution du taux de mortalité de *Tetranychus urticae* (femelles âgées de 24 à 48 heures) en fonction de la dose de 91991,
      - figure 3, l'évolution du taux de mortalité de *Tetranychus urticae* (stade larve à deutonymphes) en fonction de la dose de 91991, et
      - figure 4, effet de l'association de 91991 ou 91992 avec PLICTRAN^{R} 600F (dose : 300, 3000 ou 6000 ppm de Cyhexatin) sur la mortalité des femelles de *Tetranychus urticae*.

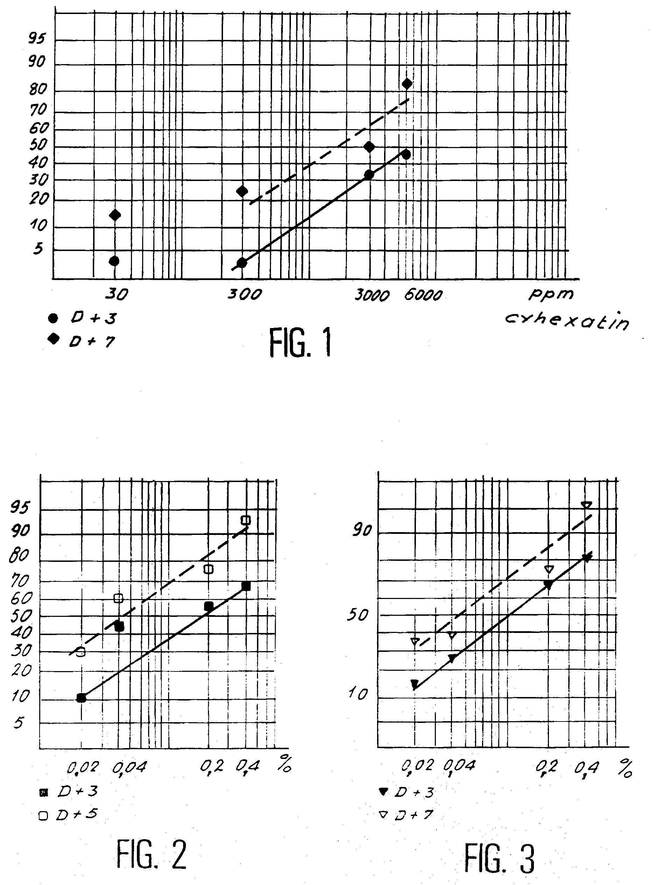

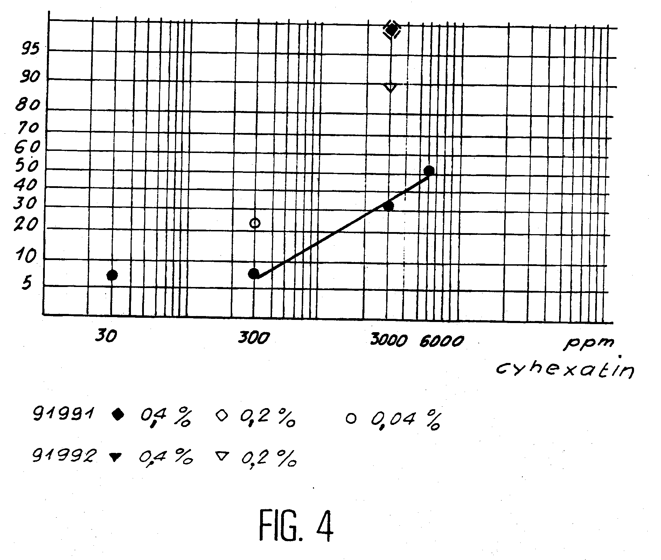

      5.1 Résistance de *Tetranychus urticae* au PLICTRAN^{R}600F
         Le niveau de résistance est très élevé.
         La DL50 est environ dix fois supérieure à la dose normalement préconisée (Tableau 1 et Figure 1).
      5.2 Activité acaricide de 91991
         On observe une réponse linéaire très satisfaisante de la mortalité des stades immatures en fonction de la dose.
         Il en est de même pour les stades adultes qui se montrent toutefois un peu moins sensibles (Tableaux 3,4 et Figures 2,3).
         La mortalité évolue peu dans le temps (15 % à J+3, 20 % à J+7). On constate donc surtout un effet de choc.
         La DL50 est voisine de 0,2 % et l'effet acaricide est satisfaisant à 0,4 %.
      5.3 Activité acaricide de 91992
         Pour les mêmes doses de 0,2 et 0,4 %, l'efficacité du produit 91992 apparaît un peu inférieure à celle du 91991 (Tableaux 5 et 6). C'est pourquoi les doses faibles (0,02 % et 0,04 %) n'ont pas été testées.
      5.4 Activité de l'association 91991 ou 91992 + PLICTRAN^{R}600F
         L'addition de 91991 ou 91992 au PLICTRAN^{R} 600F (à la dose 300 ou 3000 ppm) se traduit par un accroissement appréciable de la mortalité. Cette augmentation semble fonction de la dose, si l'on en juge par l'écart relatif des points correspondant à PLICTRAN^{R} 600F (300 ppm) + 0,04 % de 91991 et PLICTRAN^{R} 600F (3000 ppm) + 0,02 % de 91991 (Figure 4). Cette augmentation de la mortalité s'explique par une simple addition des toxicités de chaque produit.
         Toutefois, la comparaison des distributions de la mortalité entre noyés et morts (Tableaux 1 et 2) laisse supposer une action de 91991 et 91992 sur le comportement de l'acarien.
      5.5 Dans les conditions de cette expérimentation en laboratoire et avec une population de *Tetranychus urticae* fortement résistante au Cyhexatin, l'ajout de 91991 ou 91992 permet une augmentation de l'efficacité de PLICTRAN^{R} 600F. Cet accroissement correspond en fait à une simple addition des effets acaricides des deux produits (PLICTRAN^{R} 600F - 91991 ou 91992).
         91991 et 91992 modifient le comportement de l'acarien, comme en témoigne la proportion plus élevée d'animaux qui se noient.
         91991 est plus efficace que 91992 et a une activité équivalente à celle du PLICTRAN^{R} 600F quand on l'utilise à la dose de 0,4 %.
         Par ailleurs, des résultats tout aussi intéressants ont été obtenus dans le cadre de tests effectués sur *Eotetranychus carpini* et sur *Panonychus ulmi*, tous deux prédateurs de la vigne.
         La composition 6, diluée à 2 ‰, a été pulvérisée sur le puceron *Rhopalosiphum padi* maintenu en élevage sur de jeunes plants de maïs en serre climatisée à 20° C ; elle permet d'obtenir une mortalité de l'ordre de 70 % après six jours.
         De même, la composition 9, diluée à 2,5 ‰, a été pulvérisée sur des feuilles de melon hébergeant le ravageur *Thrips palmi* ; elle permet d'obtenir une mortalité de 60 à 75 % après six jours.
         Cette même composition 9, diluée à 3 ‰ puis pulvérisée sur le thrips *Frankiniella occidentalis* élevé sur des feuilles d'*Euphorbia poinsettia*, permet d'obtenir une mortalité de 55 à 80 %.
IV/ Tests en plein champ
   1. Ces tests ont été mis en place sur la vigne, contre *Eotetranychus carpini*, selon les méthodes et avec les références officielles de la Commission des Etudes Biologiques.
      Trois traitements ont été effectués sur trois sites différents.
   2. Acaricides testés :
      . 91991 selon l'invention (composition 3a) : utilisé sous la forme d'une solution diluée contenant 0,4 % de 91991, la solution diluée étant appliquée à raison de 500 litres/ha.
      . KELTHANE^{R} 50 : acaricide de référence contenant 480 g/l de dicofol [trichloro-2,2,2-bis(chloro-4 phényl)-1,1-éthanol] et appliqué à raison de 1 litre/ha.
   3. Résultats :
      Sont exprimés par le nombre d'acariens pour 100 larves à J+x avec statistiques analytiques au seuil de 5 %.

| | Traitement No. 1 | | Traitement No. 2 | Traitement No. 3 | |
|---|---|---|---|---|---|
| | J+5 | J+30 | J+39 | J+3 | J+14 |
| Témoin | 392^{c} | 2006^{c} | 137^{b} | 930^{b} | 275^{c} |
| KELTHANE^{R} | 112^{b} | 568^{b} | 33^{a} | 655^{ab} | 35^{ab} |
| 91991 | 8^{a} | 136^{a} | 11^{a} | 500^{a} | 60^{b} |

Ces résultats confirment l'efficacité acaricide de 91991 ; ils montrent en outre que 91991 est aussi efficace que le KELTHANE^{R} ou même supérieur au KELTHANE^{R} (voir traitement No. 1)

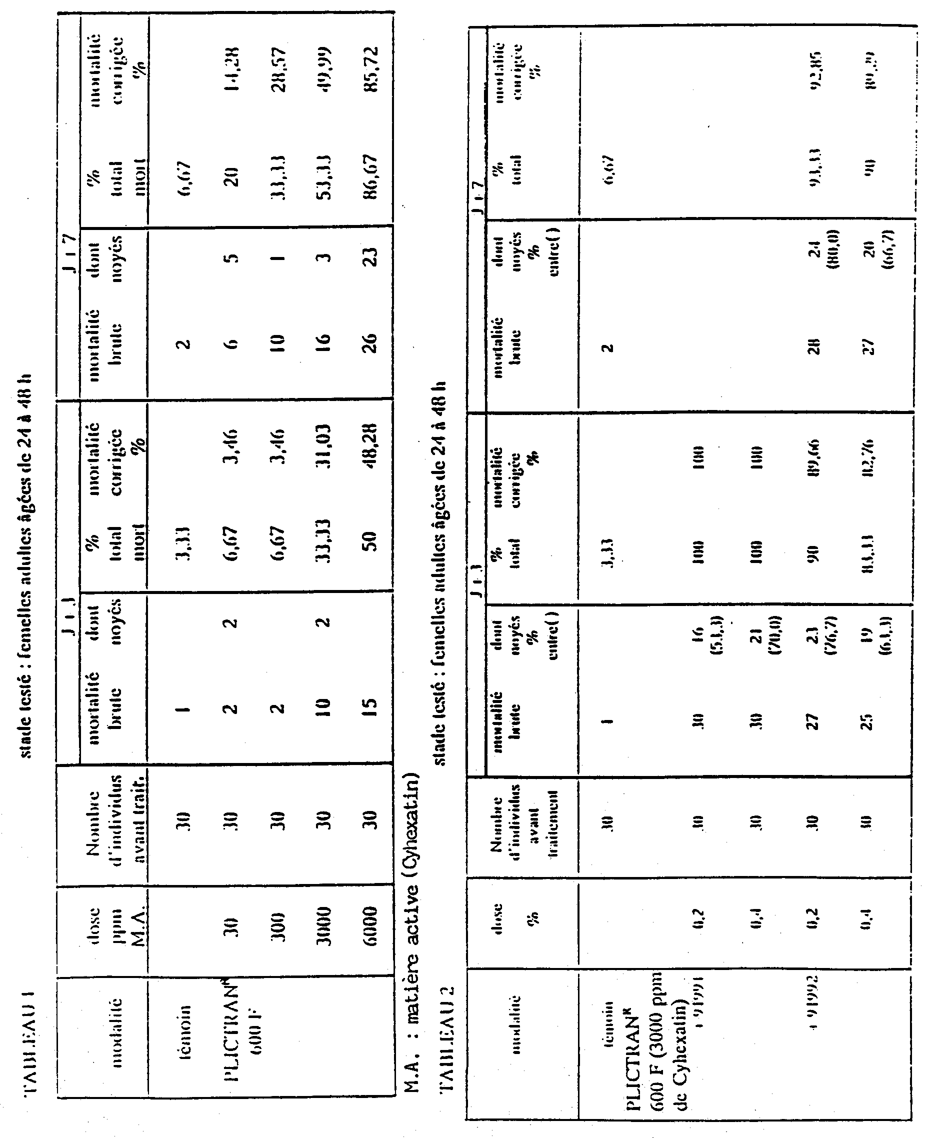

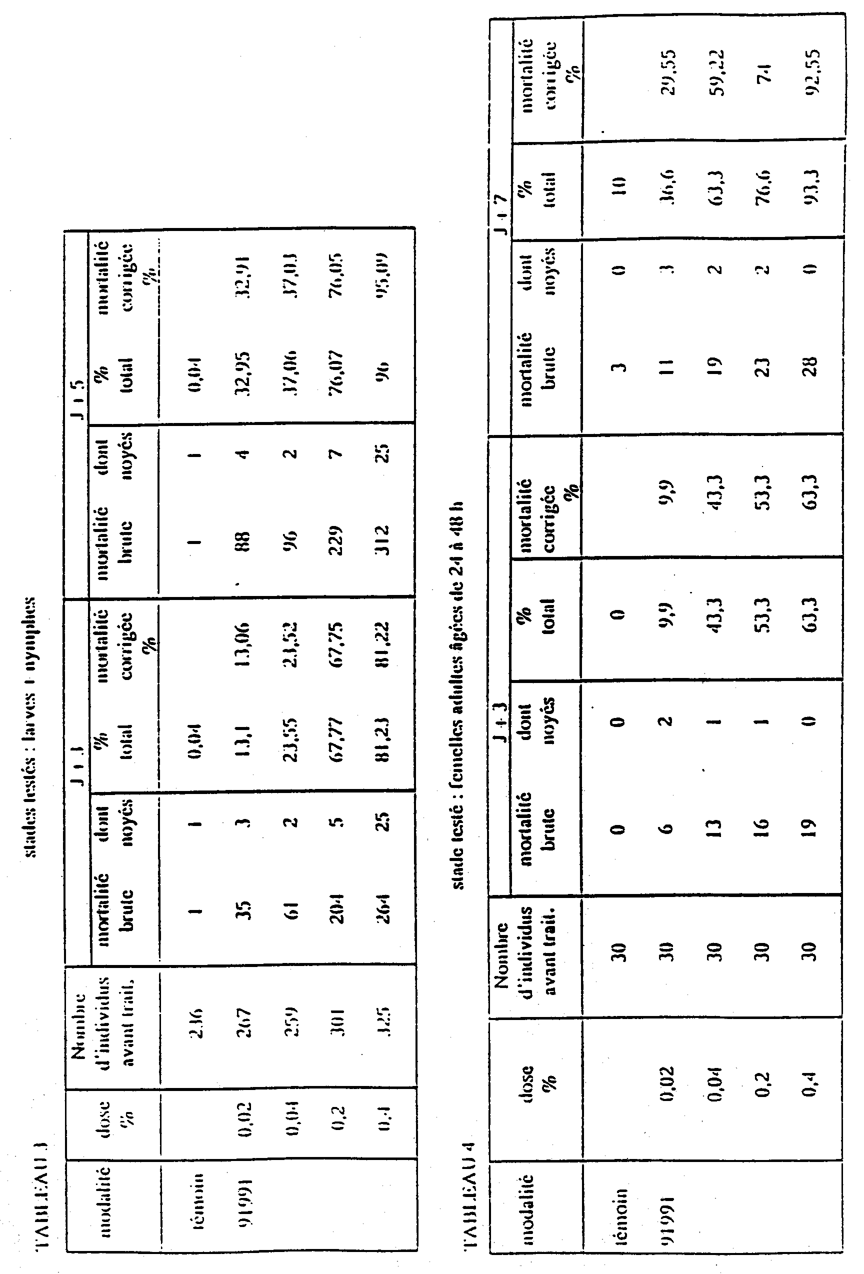

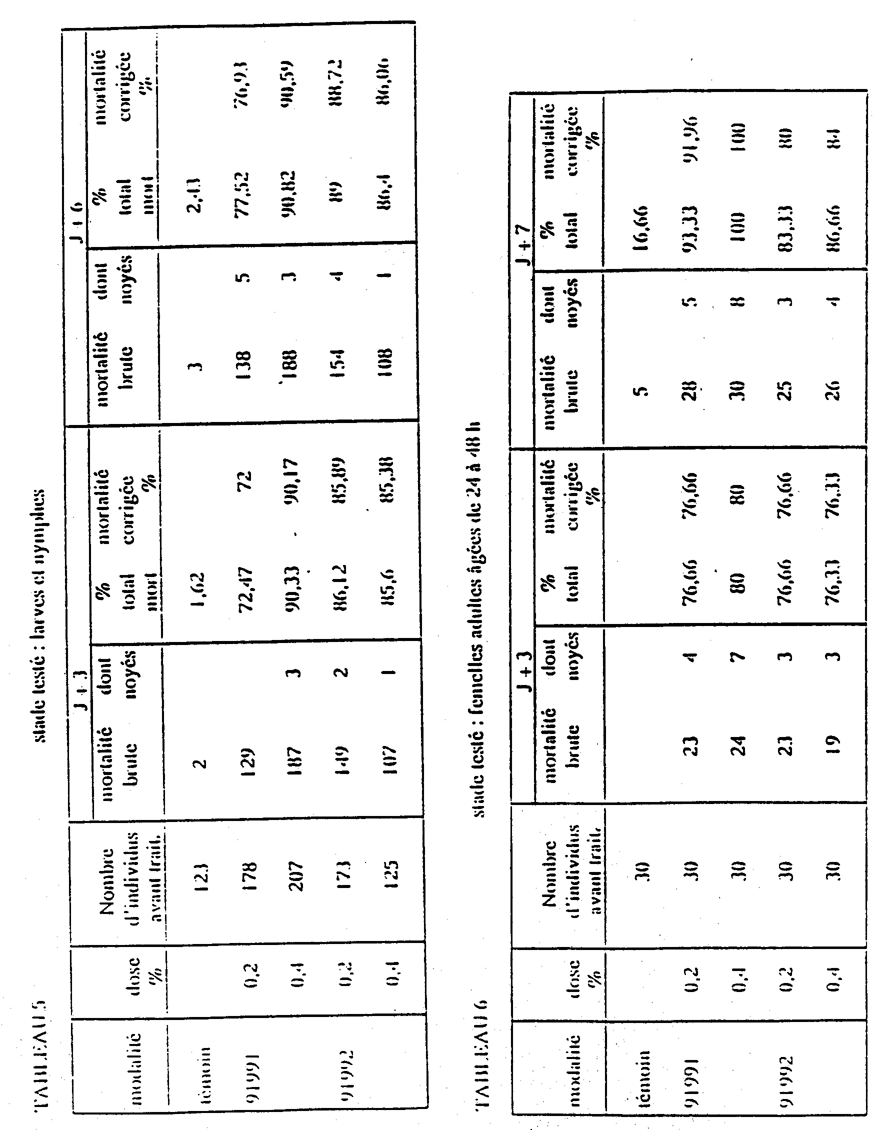

## Revendications

1. Procédé de protection, à titre préventif ou curatif, d'un site contre les insectes et les acariens déprédateurs des cultures, caractérisé en ce qu'il comprend l'application sur le site d'une composition contenant dans un véhicule approprié, en tant que principe actif, un mélange comprenant :
- au moins un agent tensio-actif anionique choisi parmi les agents tensio-actifs anioniques ayant une action inhibitrice sur la formation de la cuticule des insectes et acariens visés, et
- au moins un médiateur chimique agissant sur le comportement des insectes et acariens visés et choisi parmi les substances phéromonales et les substances allélochimiques.

2. Procédé selon la revendication 1, caractérisé en ce que l'agent tensio-actif anionique possède une valeur HLB d'au moins 10.

3. Procédé selon la revendication 1 ou 2, caractérisé en ce que l'agent tensio-actif anionique est choisi parmi les sels de métal alcalin, alcalino-terreux, d'ammonium ou de triéthanolamine des esters dialkyliques de l'acide sulfosuccinique et les sels de métal alcalin ou alcalinoterreux des esters d'acide sulfurique et d'alcools gras saturés ou insaturés.

4. Procédé selon l'une des revendications précédentes, caractérisé en ce que l'agent tensio-actif anionique est le dodécyl sulfate de sodium ou le dioctyl sulfosuccinate de sodium.

5. Procédé selon l'une quelconque des revendications précédentes, caractérisé en ce que le médiateur chimique est choisi dans le groupe constitué par le nérolidol, le cinéole, l'alpha-pinéne, le farnésol, le géraniol, l'anisaldéhyde, le trans-béta-farnésène, le citral, la coumarine et leurs mélanges compatibles.

6. Procédé selon l'une des revendications précédentes, caractérisé en ce que ladite composition comprend en outre au moins un rétenteur de produit volatil.

7. Procédé selon la revendication 6, caractérisé en ce que le rétenteur est choisi dans le groupe constitué par l'acide undécylénique, l'undécylénate de méthyle et l'huile de ricin.

8. Procédé selon la revendication 6 ou 7, caractérisé en ce que la composition appliquée se présente sous la forme d'un concentré à diluer (à 2 % - 2 ‰) avec de l'eau avant utilisation, ce concentré comprenant 50 à 80 % (p/v) d'au moins un agent tensio-actif anionique, 0,01 à 10 % (p/v) d'au moins un médiateur chimique, et 10 à 18 % (p/v) d'au moins un rétenteur de produit volatil.

9. Procédé selon la revendication 8, caractérisé en ce que la composition appliquée présente la formulation :
| | |
|---|---|
| . nérolidol | 2 à 6 g |
| . farnésol | 1 à 4 g |
| . géraniol | 2 à 6 g |
| . dioctyl sulfosuccinate de sodium | 600 à 750 g |
| . undécylénate de méthyle | 100 à 150 g |
| . eau ou glycol miscible à l'eau | complément à 1000 ml |
ou la formulation :
| | |
|---|---|
| . béta-farnésène | 0,1 à 0,5 g |
| . géraniol | 5 à 10 g |
| . dioctyl sulfosuccinate de sodium | 650 à 750 g |
| . undécylénate de méthyle | 100 à 150 g |
| . eau ou glycol miscible à l'eau | complément à 1000 ml |
ou la formulation :
| | |
|---|---|
| . anisaldéhyde | 8 à 25 g |
| . géraniol | 5 à 10 g |
| . dodécyl sulfate de sodium | 600 à 700 g |
| . undécylénate de méthyle | 100 à 150 g |
| . eau | complément à 1000 ml |

10. Procédé selon l'une quelconque des revendications précédentes, caractérisé en ce que les différents constituants sont appliqués séparément sur le site de manière à former la composition in situ.

11. Utilisation pour la lutte contre les insectes, notamment les homoptères, coléoptères et thysanoptères et contre les acariens, d'une composition contenant dans un véhicule approprié, en tant que principe actif, un mélange comprenant :
- au moins un agent tensio-actif anionique choisi parmi les agents tensio-actifs anioniques ayant une action inhibitrice sur la formation de la cuticule des insectes et acariens visés, et
- au moins un médiateur chimique agissant sur le comportement des insectes et acariens visés et choisi parmi les substances phéromonales et les substances allélochimiques.

12. Utilisation selon la revendication 11, caractérisée en ce que ladite composition est conforme à celle définie à l'une des revendications 2 à 9.

13. Composition pour la lutte contre les insectes, notamment les homoptères, coléoptères et thysamoptères et contre les acariens, caractérisée en ce qu'elle est conforme à celle définie à l'une quelconque des revendications 6 à 9.

## Claims

1. A process for protecting, as a preventive or curative measure, a site against crop predatory insects and mites, characterized in that it comprises the step of applying to the site a composition containing in a suitable vehicle, as an active principle, a mixture comprising :
- at least one anionic surfactant chosen among the anionic surfactants having an inhibitory action upon the formation of cuticula of the target-insects and -mites; and
- at least one chemical mediator capable of modifying the behavior of the target-insects and -mites and chosen among pheromonal substances and allelochemical substances.

2. The process according to Claim 1, characterized by the fact that the anionic surfactant has a HLB value of at least 10.

3. The process according to Claim 1 or 2, characterized by the fact that the anionic surfactant is chosen among the alkali metal or alkaline-earth metal or ammonium or triethanolamine salts of dialkyl esters of sulphosuccinic acid and the alkali metal or alkaline-earth metal salts of esters of sulfuric acid and saturated or unsaturated fatty alcohols.

4. The process according to anyone of the preceding Claims, characterized by the fact that the anionic surfactant is sodium dodecyl sulfate or sodium dioctyl sulphosuccinate.

5. The process according to anyone of the preceding Claims, characterized by the fact that the chemical mediator is chosen from the group consisting of nerolidol, cineole, alpha-pinene, farnesol, geraniol, anisaldehyde, trans-beta-farnesene, citral, coumarin and compatible mixtures thereof.

6. The process according to anyone of the preceding Claims, characterized by the fact that said composition further comprises at least one retentive agent capable of retaining a volatile product.

7. The process according to Claim 6, characterized by the fact that the retentive agent is chosen from the group consisting of undecylenic acid, methyl undecylenate and castor oil.

8. The process according to Claim 6 or 7, characterized by the fact that said composition is applied in the form of a concentrate to be diluted (at 2% - 2‰) with water before use, this concentrate comprising :
- 50 to 80% (w/v) of at least one anionic surfactant ;
- 0.01 to 10% (w/v) of at least one chemical mediator ; and
- 10 to 18% (w/v) of at least one retentive agent.

9. The process according to Claim 8, characterized by the fact that the applied composition is formulated as follows :
| | |
|---|---|
| . nerolidol | 2 to 6 g |
| . farnesol | 1 to 4 g |
| . geraniol | 2 to 6 g |
| . sodium dioctyl sulphosuccinate | 600 to 750 g |
| . methyl undecylenate | 100 to 150 g |
| . water or water miscible glycol | balance to 1000 ml |
or as follows :
| | |
|---|---|
| . beta-farnesene | 0.1 to 0.5 g |
| . geraniol | 5 to 10 g |
| . sodium dioctyl sulphosuccinate | 650 to 750 g |
| . methyl undecylenate | 100 to 150 g |
| . water or water miscible glycol | balance to 1000 ml |
or as follows :
| | |
|---|---|
| . anisaldehyde | 8 to 25 g |
| . geraniol | 5 to 10 g |
| . sodium dodecyl sulfate | 600 to 700 g |
| . methyl undecylenate | 100 to 150 g |
| . water | balance to 1000 ml. |

10. The process according to anyone of the preceding Claims, characterized by the fact that the different components are applied separately to the site so as to form the composition in situ.

11. Use for controlling insects, especially Homoptera, Coleoptera and Thysanoptera, and for controlling mites, of a composition containing in a suitable vehicle, as an active principle, a mixture comprising :
- at least one anionic surfactant chosen among the anionic surfactants having an inhibitory action upon the formation of cuticula of the target-insects and -mites ; and
- at least one chemical mediator capable of modifying the behavior of the target-insects and -mites and chosen among pheromonal substances and allelochemical substances.

12. Use according to claim 11, characterized by the fact that said composition is a defined in anyone of claims 2 to 9.

13. Composition for controlling insects, especially Homoptera, Coleoptera and Thysanoptera, and for controlling mites, characterized by the fact that it is as defined in anyone of claims 6 to 9.

## Patentansprüche

1. Verfahren zum präventiven oder heilenden Schützen einer Stelle von Pflanzenkulturen gegen Insekten und Raubmilben (Akariden), dadurch gekennzeichnet, daß man auf die Stelle eine Zusammensetzung aufbringt, die ein geeignetes Vehiculum und als Wirkstoff (aktives Prinzip) eine Mischung enthält, die umfaßt:
- mindestens ein anionisches Tensid, ausgewählt aus anionischen Tensiden, die eine Inhibierungswirkung auf die Bildung der Oberhaut (Epidermis) der betrachteten Insekten und Akariden haben, und
- mindestens einen chemischen Mediator, der auf das Verhalten der betrachteten Insekten und Akariden einwirkt und ausgewählt wird unter pheromonalen Substanzen und allelochemischen Substanzen.

2. Verfahren nach Anspruch 1, dadurch gekennzeichnet, daß das anionische Tensid einen HLB-Wert von mindestens 10 aufweist.

3. Verfahren nach Anspruch 1 oder 2, dadurch gekennzeichnet, daß das anionische Tensid ausgewählt wird aus den Alkalimetall-, Erdalkalimetall-, Ammonium- oder Triethanolaminsalzen der Sulfobernsteinsäuredialkylester und den Alkalimetall- oder Erdalkalimetallsalzen der Ester von Schwefelsäure mit gesättigten oder ungesättigten Fettalkoholen.

4. Verfahren nach einem der vorhergehenden Ansprüche, dadurch gekennzeichnet, daß es sich bei dem anionischen Tensid um Natriumdodecylsulfat oder Natriumdioctylsulfosuccinat handelt.

5. Verfahren nach einem der vorhergehenden Ansprüche, dadurch gekennzeichnet, daß der chemische Mediator ausgewählt wird aus der Gruppe, die besteht aus Nerolidol, Cineol, α-Pinen, Farnesol, Geraniol, Anisaldehyd, trans-β-Farnesen, Citral, Cumarin und ihren kompatiblen Mischungen.

6. Verfahren nach einem der vorhergehenden Ansprüche, dadurch gekennzeichnet, daß die genannte Zusammensetzung außerdem mindestens ein Retentionsmittel für ein flüchtiges Produkt enthält.

7. Verfahren nach Anspruch 6, dadurch gekennzeichnet, daß das Retentionsmittel ausgewählt wird aus der Gruppe, die besteht aus Undecylensäure, Methylundecylenat und Rizinusöl.

8. Verfahren nach Anspruch 6 oder 7, dadurch gekennzeichnet, daß die aufgebrachte Zusammensetzung in Form eines Konzentrats vorliegt, das vor der Verwendung mit Wasser zu verdünnen ist (auf 2 % bis 2 ‰), wobei dieses Konzentrat 50 bis 80 Gew./Vol.-% mindestens eines anionischen Tensids, 0,01 bis 10 Gew./Vol.-% mindestens eines chemischen Mediators und 10 bis 18 Gew./Vol.-% mindestens eines Retentionsmittels für ein flüchtiges Produkt umfaßt.

9. Verfahren nach Anspruch 8, dadurch gekennzeichnet, daß die aufgebrachte Zusammensetzung die Formulierung
| | |
|---|---|
| Nerolidol | 2 bis 6 g |
| Farnesol | 1 bis 4 g |
| Geraniol | 2 bis 6 g |
| Natriumdioctylsulfosuccinat | 600 bis 750 g |
| Methylundecylenat | 100 bis 150 g |
| Wasser oder mit Wasser mischbares Glycol | ad 1000 ml |
oder die Formulierung
| | |
|---|---|
| β-Farnesen | 0,1 bis 0,5 g |
| Geraniol | 5 bis 10 g |
| Natriumdioctylsulfusuccinat | 650 bis 750 g |
| Methylundecylenat | 100 bis 150 g |
| Wasser oder mit Wasser mischbares Glycol | ad 1000 ml |
oder die Formulierung hat:
| | |
|---|---|
| Anisaldehyd | 8 bis 25 g |
| Geraniol | 5 bis 10 g |
| Natriumdodecylsulfat | 600 bis 700 g |
| Methylundecylenat | 100 bis 150 g |
| Wasser | ad 1000 ml |

10. Verfahren nach einem der vorhergehenden Ansprüche, dadurch gekennzeichnet, daß die verschiedenen Komponenten auf die Stelle getrennt aufgebracht werden, um so die Zusammensetzung in situ zu bilden.

11. Verwendung einer Zusammensetzung, die in einem geeigneten Vehiculum als Wirkstoff (aktives Prinzip) eine Mischung enthält, die umfaßt:
- mindestens ein anionisches Tensid, ausgewählt aus anionischen Tensiden, die eine Inhibierungswirkung auf die Bildung der Oberhaut (Epidermis) der betrachteten Insekten und Akariden haben, und
- mindestens einen chemischen Mediator, der auf das Verhalten der betrachteten Insekten und Akariden einwirkt und ausgewählt wird aus pheromonalen Substanzen und allelochemischen Substanzen,
zum Bekämpfen von Insekten, insbesondere Homopteren, Coleopteren und Thysanopteren, und von Akariden.

12. Verwendung nach Anspruch 11, dadurch gekennzeichnet, daß die genannte Zusammensetzung derjenigen entspricht, wie sie in einem der Ansprüche 2 bis 9 definiert ist.

13. Zusammensetzung zur Bekämpfung von Insekten, insbesondere Homopteren, Coleopteren und Thysanopteren, und von Akariden, dadurch gekennzeichnet, daß sie derjenigen entspricht, wie sie in einem der Ansprüche 6 bis 9 definiert ist.
